# EUROPEAN PATENT SPECIFICATION

(11) **EP 2 730 794 B1**
(45) Date of publication and mention of the grant of the patent: **15.08.2018**
(21) Application number: 13188071.8
(22) Date of filing: 10.10.2013
(51) Int. Cl.: F16D 3/33

(54) **A centering ball structure for self centering double cardan joints**
Zentrierballstruktur zum Selbstzentrieren doppelter Kardangelenke
Structure de tête de centrage pour joints de cardan double à centrage automatique

(30) Priority: 08.11.2012 TR 201212918
(43) Date of publication of application: 14.05.2014
(73) Proprietor: Tirsan Kardan Sanayi Ve Ticaret Anonim Sirketi, 45030 Manisa (TR)
(72) Inventor: KORUK, Adnan, Manisa (TR); TASAN, Korkut, Manisa (TR); DEVECI, Omer, Manisa (TR); DAVAZLI, Sabahattin, Manisa (TR); DIZELEK, M. Eren, Manisa (TR)
(74) Representative: Sezgin, Hatice Özlem

(56) References cited:
- DE-B4-102005 053 362
- DE-U1- 9 418 745
- FR-A- 785 581
- GB-A- 475 455
- US-A- 1 266 061
- US-A- 3 803 685

## Description

### Technical Field

The present invention relates to a centering ball structure on self-centering double cardan joints, which used generally in the cardan shafts transmitting the rotation motion and torque in the motor vehicles and enabling the axis of rotation to be changed, provides bending of two connection pieces of said joint with equal angle.

### Prior Art

When the axis of rotation of the cardan or axle shafts is required to be changed with high angles, the cross joints disposed conventionally on said shafts show certain deficiencies. The cross joints bending with excessive angles create fluctuations in the angular velocity proportionally with the working angles. The angular velocity fluctuations lead to comfort issues such as vibration, sound, noise, etc. as well as give rise to deformation of components by early wear thereof.

In order to prevent these adverse situations caused by the cross joint, structures in which the two cross joints work symmetrically with respect to a center are developed. In these structures, the angular velocity fluctuations created by the first cross joint is compensated by other joint working with an angel symmetrical to said joint and the created fluctuation being just on the joint body is provided. The joints comprising two cross joints working with this principle and a body connected to said cross joints is referred to as the double cardan joints. The self-centering double cardan joint, a special type of double cardan joints, comprises two cross joints connected to the main body, a ball connected to the connecting flanges and a ball socket. The ball and the ball socket connected to the cross joints enable the joints to bend with symmetrical angles with respect to the main body, thus, allow for compensation of the fluctuation created by one joint by the other joint provided at a symmetrical angle thereof.

Currently, various mechanisms have been developed to provide symmetrical angling of the input and output pieces of the self-centering cardan joints. In many of these mechanisms, a ball and a ball socket in which said ball operates are provided. Different methods are developed for association of the ball and ball socket provided in said mechanisms with each other and various structures are proposed.

The structure according to the present invention proposes a new alternative configuration for said association configurations, providing solutions to the numerous problems encountered in the existing applications.

In the prior art, various designs are proposed for the ball and the socket thereof provided in the middle of the self-centering cardan shafts. The main object of said designs is to provide only 3 rotational degrees of freedom for the ball provided with a channel in the middle portion thereof by preventing the 3 translational degrees of freedom thereof (the objects have 3 translational + 3 rotational = 6 degrees of freedom in space). The ball should be trapped in a female cavity concentric therewith in order to allow for such movement thereof. Said condition is made possible by various designs.

As shown in the self-centering cardan joint set forth by the patent US2988904A, the ball is tightly placed into the cylindrical cavity formed on the piece disposed at one end of the joint together with the socket insert being passed around it. In this and similar applications where the ball and the piece are associated using a insert, it is difficult to precisely fix the insert on said piece. The socket insert generally fitted tightly into the slot thereof causes the ball to have more friction and wear due to the pressure put thereon resulting from the tightness, while in the opposite case, loose placement thereof can also cause the ball to come off easily during the operation on the cylindrical cavity in which the socket insert is placed. For an ideal placement, the cylindrical cavity and the ball should be machined in very precise tolerances. The tightly fitted insert is not reused after being removed as well as it is not convenient to replace it with a new one due to the wear of the bore into which it is placed over time; as it is difficult to achieve the appropriate tightness.

One of the most common techniques used in the prior art is to form the geometry on the piece for bearing the ball. A self-centering cardan joint formed using this method is disclosed in the patent DE102005053362B4. In order to set the ball disposed on the ball socket formed integrally with the piece free only in the directions of rotation, the open end of the spherical bore on the piece should be smaller than the diameter of the ball such that the ball is prevented from coming off. However, special processes should be performed on the ball in order to place it into the spherical socket formed by this method. For this reason, a diameter of the ball in a plane thereof should be downsized by lathing. The ball having the diameter thereof downsized as such in a plane passes through the input bore, sits on the center thereof and is prevented from coming off said bore by being rotated therein. There are several challenges with the structure set forth by this method. One of the most important of these challenges is to smooth the outer surface of the ball cylindrically by lathing after the machining thereof. The lathing of the ball made of rigid material is difficult as well as machining the outer surface thereof by operations such as grinding or the like is also hard.

In the prior art, in order to place the ball with a bore in the middle portion thereof into the spherical recess form that will bear it, the diameter thereof should be downsized in at least a plane to a diameter smaller than the input diameter of the ball socket by means of a peripheral lathing. The diameter lathing performed as such on the ball manufactured from rigid material and generally provided with applications of surface hardening and polishing makes the manufacturing difficult. The outside peripheral downsizing in a plane of the diameter of the ball brought precisely to the diameter dimension by lathing causes the deterioration of the precision surface thereof. In addition, the broaching performed prior to the machining of the precision surface leads to the discontinuity in these regions during the precision surface forming operations. This makes the process difficult as well as can cause degradation of the surface quality.

Another disadvantage encountered in the prior art is the formation of sharp edges on both sides of the peripheral lathing form formed on the ball for mounting. The ball located inside the double joint rotating at high speeds also moves at high speeds inside the socket thereof. During said movement, the edges on the ball can cause the socket to wear over time.

One of the prior-art documents is related to the subject is FR785581A. This document also refers to a configuration of a cardan, in which a modification is made on the ball placed in the socket for transfer of the movement. In order to facilitate the assembly, said ball is divided into two parts over an axis, and in this embodiment the socket construction remains the same as the known art before this document.

Similarly, the patent US2011306430A1 mentions that material removing process is performed by means of machining on the surface of the ball being in contact with the socket such that said ball has 3 rotational degrees of freedom inside said socket.

### Objects of the Invention

The present invention relates to a centering ball structure used as a centering unit in the self-centering cardan joints and enabling symmetrical bending of the input and output pieces provided on both ends of the joint respective to the joint body, wherein it comprises the structure meeting all the aforementioned prior art requirements, eliminating the disadvantages and providing certain additional advantages.

The aforementioned disadvantages of the prior art is eliminated as the outer surface of the ball with a bore in the middle portion thereof used in the structure proposed by the present invention is provided with a complete spherical geometry. Manufacturing, installation and cost advantages are achieved by eliminating the precision operations such as lathing, grinding, etc. carried out for reducing the diameter in a plane on the outer surface of the ball. In addition, presence of the sharp edges as a result of the lathing performed for diameter downsizing process of the prior art to damage the ball socket is prevented and a longer lasting structure is obtained.

In order to fulfill the objects described above, a self-centering double cardan joint of the type used in the cardan shafts transmitting the rotational motion and torque in the motor vehicles and enabling the axis of rotation to be changed, in which input and output pieces are connected to a body by means of cross joints, in which the input piece comprises a ball socket, the output piece comprises a centering pin operating inside the cylindrical recess form provided inside the ball that will be placed inside the ball socket is developed, wherein said ball is provided with a complete spherical geometry such that it does not comprise any lathing form and two mounting recesses are opposedly formed on the upper portion of the ball socket.

In order to achieve the objects of the present invention, the ball has a diameter (D), wherein the ball diameter (D) is designed so as to be larger than the mouth diameter (d) of the ball socket.

In order to achieve the objects of the present invention, the mounting recesses formed opposedly on the upper portion of the ball socket have a width (x), wherein the width (x) of the mounting recess form is greater than the height (H) of the ball.

In order to achieve the objects of the present invention, shaping of the mounting recesses formed opposedly on the upper portion of the ball socket so as to be at least same level with the horizontal plane passing through the center of the ball is provided.

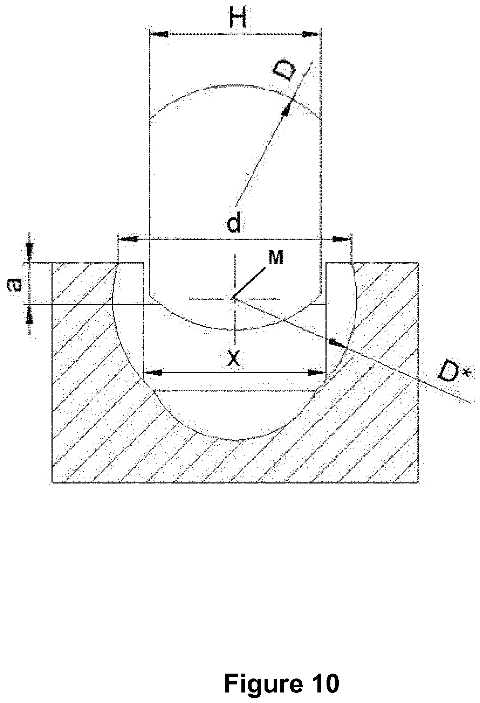

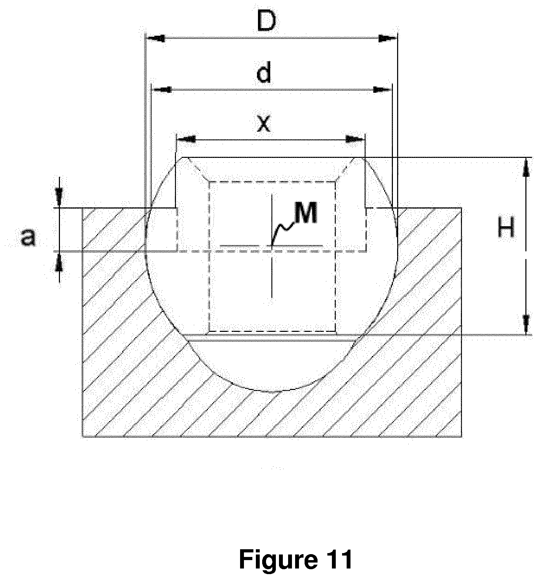

In order to achieve the objects of the present invention, the depth (a) of the mounting recess is designed so as to be at the same level with or deeper than the center of the ball socket (M). The recess form depth (a) formed at adequate depth allows the ball (22) to be placed concentrically (M) into the ball socket (21) in a vertical position (Figure 10). The ball (22) placed concentrically in a vertical position is confined inside the socket by being rotated therein (Figure 11).

The structural and the characteristic features and all advantages of the present invention will be understood more clearly with the following figures and the detailed description written by referring to said figures and therefore, the evaluation needs to be done by taking said figures and detailed description into consideration.

### Figures for a Better Understanding of the Invention

Figure 1 is a perspective view of the self-centering cardan joint according to the present invention in a straight position.
Figure 2 is a perspective view of the self-centering cardan joint according to the present invention in a bended position.
Figure 3 is a perspective view of the ball socket and the ball according to the present invention.
Figure 4 illustrates the perspective views showing the placement manner of the ball according to the present invention into the ball socket.
Figure 5 illustrates the perspective views of the mounting of the ball socket and the ball used in the prior art to each other.
Figure 6 is a cross sectional perspective view of the self-centering cardan joint according to the present invention in a straight position.
Figure 7 is a cross sectional perspective view of the self-centering cardan joint according to the present invention in a bended position.
Figure 8 is a perspective view of an alternative structure of the ball socket according to the present invention.
Figure 9 is a perspective view of an alternative structure of the ball socket according to the present invention.
Figure 10 is a cross sectional side view of the ball socket and the ball in the vertical position according to the present invention.
Figure 11 is a cross sectional view of the ball after being born inside the ball socket.

Scaling of drawings is not absolutely required and details, which are not needed for understanding the present invention, could have been neglected. Furthermore, elements, which are at least substantially identical or have at least substantially identical functions, are indicated with the same number.

### Description of Part References

10. Input piece
11. Body
12. Output piece
13. Cross joint
21. Ball socket
22. Ball
23. Centering pin
24. Mounting recess
25. Cylindrical recess form
31. Lathing form
D. Ball diameter
D*.Ball socket diameter
H. Ball height
d. Ball socket mouth diameter
x. Recess form width
a. Mounting recess depth
M. Ball socket center

### Detailed Description of the Invention

The present invention relates to a centering ball (22) and a ball socket (21) for placement of said ball (22) on self-centering double cardan joints ,which used generally in the cardan shafts transmitting the rotation motion and torque in the motor vehicles and enabling the axis of rotation to be changed, provides bending of two connection pieces of said joint with equal angle.

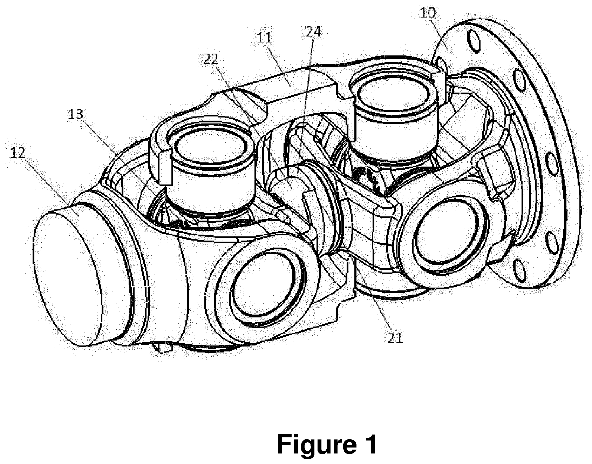

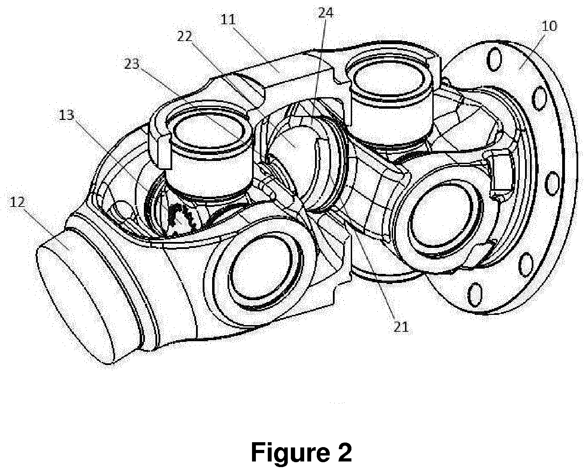

In Figure 1 and Figure 2, perspective views of the self-centering cardan joint according to the present invention are given in a straight position and an bended position, respectively. The self-centering cardan joint comprises an input piece (10) transmitting the rotational motion and torque to said self-centering cardan joint. In Figure 1 and Figure 2, the input piece (10) is shown as a flange yoke. Depending on the usage place and connection needs, pieces such as tube yokes, sliding shaft yokes can also be used as the input piece (10). The principal common ground of the alternative pieces is that all of them are similarly provided with a ball socket (21).

An output piece (12) is used as the piece transmitting the rotational motion and torque to the other side over the double joint. In the figures, the output piece (12) is given as a tube yoke. Depending on the usage place and connection needs, pieces such as flange yokes, sliding shaft yokes can also be used. The principal common ground of the alternative pieces is that all of them are similarly provided with a centering pin (23).

The input and output pieces (10, 12) are connected to a body (11) by means of cross joints (13). The body (11) can be referred to as an H-yoke or a center yoke due to the shape thereof. It is provided with a proper space in the middle portion thereof allowing for the operation of the ball (22), the ball socket (21) and the centering pin (23), connected to the input and output pieces (10, 12).

The cross joints (13) are disposed on both sides of the body (11). The input and output pieces (10, 12) are connected to the body (11) by means of cross joints (13). It comprises four special type of bearings connected to a body (13) in the form of a plus sign. It allows for formation of an angle between the axes of the two connecting pieces as a result of the movement of the bearings.

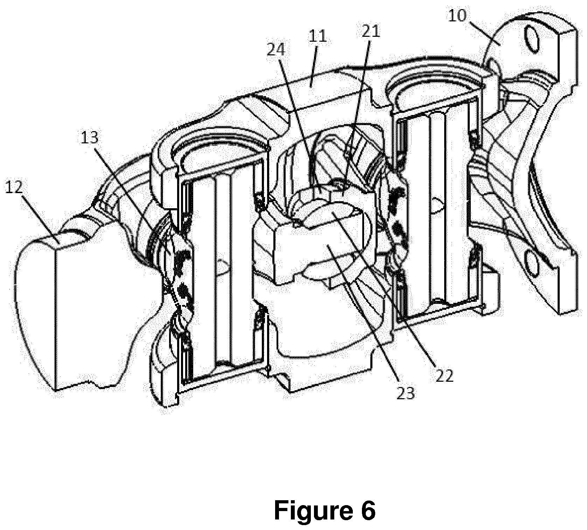

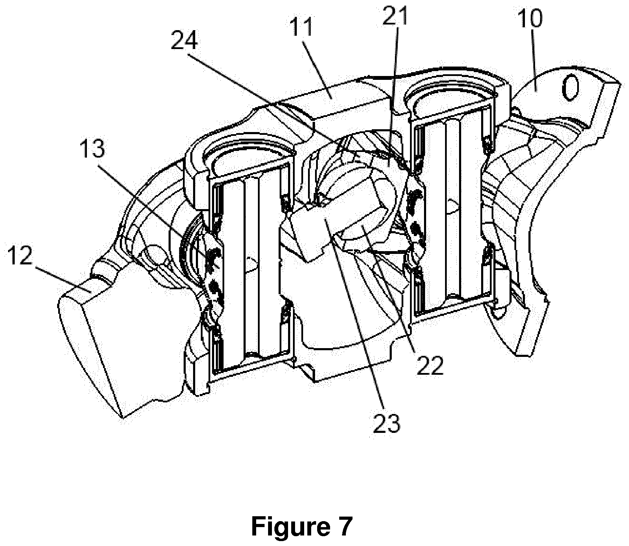

The centering pin (23) of the output piece (12) operates inside the cylindrical recess form located in the center of the ball (22). As shown in Figure 6 and Figure 7, the centering pin (23) compensates the distance differences forming in the angled operation.

The input piece (10) comprises a ball socket (21) housing the ball (22). It comprises a mounting recess (24) that is different from the ones of the prior art. Unlike the prior art, two mounting recesses (24) are opposedly formed on the upper edges of the ball socket (21) having a hollow cylindrical structure. Thanks to the mounting recesses (24), placing of the ball (22) inside the ball socket (21) is provided in a manner that is different from the prior art.

The ball (22) proposed by the present invention comprises, as in the case of the prior art, a cylindrical recess form (25) in which the centering pin (23) operates. The main difference from the prior art is that the lathing form (31) present on the ball (22) is eliminated and it is provided with a complete spherical geometry. In the prior art, it is not possible to place the ball (22) inside the ball socket (21) without forming a lathing form (31). Yet, the ball (22) according to the present invention can be placed inside the ball socket (21) without having any lathing form (31). Said placing operation is provided by means of the mounting recesses (24) formed on the ball socket (21).

The ball (22) according to the present invention comprises a geometry having a diameter (D). A cylindrical recess form (25) is provided in which the centering pin (23) operates is provided in the middle of the solid ball (22) with a diameter (D). The ball (22) according to the present invention comprises a height (H). The ball height (H) is smaller than the ball diameter (D). The ball (22) comprises a diameter (D) and the ball socket (21) comprises a diameter (D*). Said ball diameter (D) and ball socket diameter (D*) are machined with the appropriate tolerance. In other words, even if they theoretically have the same diameter, the diameter of the socket (D*) should be slightly larger than that of the ball (22) for easy movement thereof. Without the mounting recesses (24) disposed on the ball socket (21), the ball (22) cannot absolutely enter into the ball socket (21) neither in vertical position nor in horizontal position.

The ball socket (21) is machined with same diameter (D) of the ball (22) and the tolerance enabling suitable operation tightness. The mouth portion of the ball socket (21) closes so as to confine the ball (22). The mouth diameter (d) of the ball socket is designed to be smaller than the ball diameter (D) (d < D) (Figure 10 and Figure 11). As can be seen in Figure 11, the depth (a) of the mounting recess is designed so as to be at the same level with or deeper than the center of the ball socket (M). The recess form depth (a) formed at adequate depth allows the ball (22) to be placed concentrically (M) into the ball socket (21) in a vertical position. The ball (22) placed concentrically in a vertical position is confined inside the socket (21) by being rotated therein.

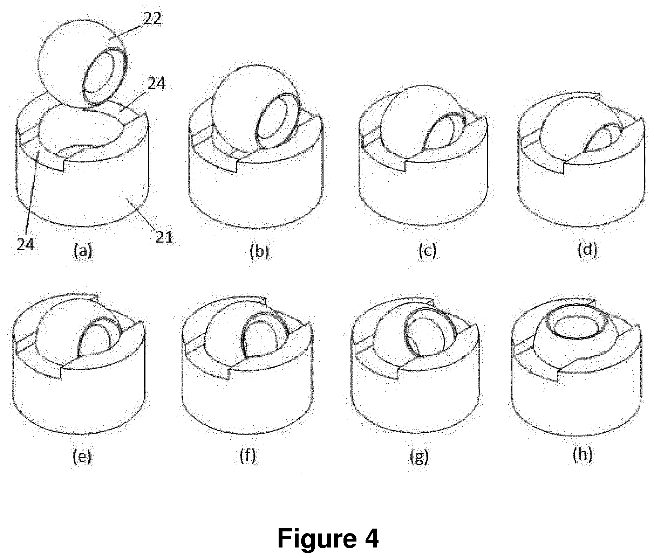

The placement of the ball (22) into the ball socket (21) with a smaller mouth diameter (d) is only possible by opposedly forming two mounting recesses (24) having a width (x) around the upper edges of the ball socket (21) (x ≥ H). Thanks to the opposite mounting race forms (24) with a width (x), the ball (22) placed into the centering socket (21) is confined inside the socket (21) upon rotation of the cylindrical recess therein so as to face the open side. Representative mounting steps of the present invention are respectively shown in Figure 4. The ball can be placed into the ball socket only in a vertical position. To enable the ball to pass into the ball socket in a vertical position, as shown in Figure 4, the mounting recesses (24) should have a depth extending until at least the center (M) of the ball socket or beyond. The ball placed as such into the ball socket is then rotated inside said ball socket (as shown in Figure 4) and provided with the position preventing it from coming off the ball socket.

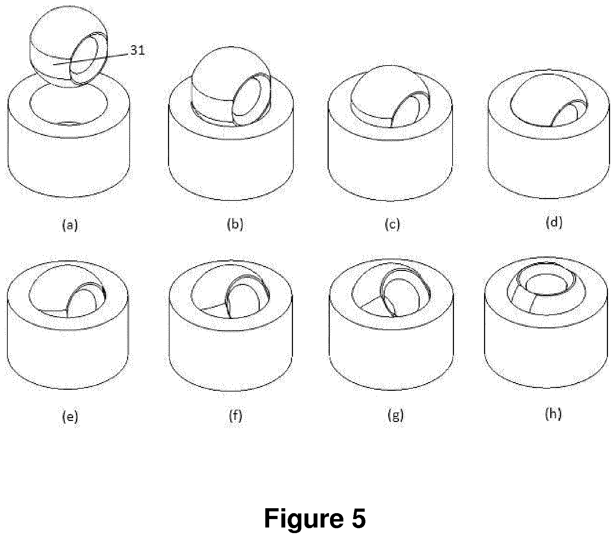

Similarly, the mounting steps of the prior art are respectively shown in Figure 5 and differences are presented.

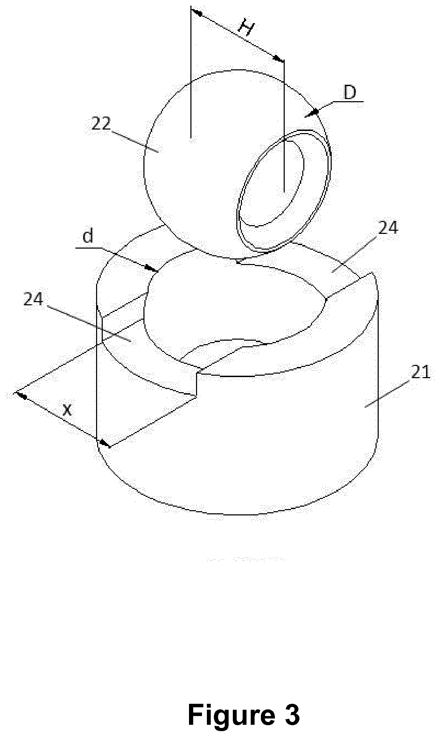

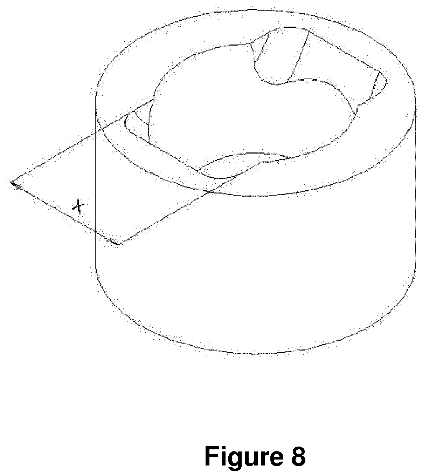

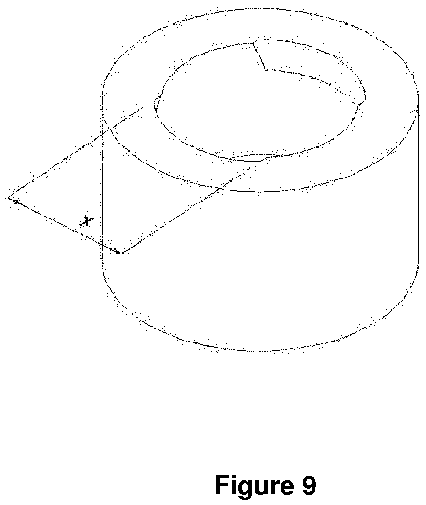

A sample mounting recess (24) provided on the ball socket (21) of the structure proposed by the present invention is shown in Figure 3. The mounting recess (24) shown in this representation has a width (x) and is formed by complete machining in the horizontal plane so as to be provided with the same depth of at least the largest diameter in the gap of the ball socket (21). The geometries formed with different manufacturing techniques enabling the enlargement of the mouth diameter (d) until the horizontal plane passing through the center of the ball so as to be greater than the width (H) can serve for the same purpose. Examples of the mounting recesses (24) formed opposedly by means of different methods are given in Figure 8 and Figure 9. Similarly, the other recess forms provided with at least a width dimension (x) and extending from the mouth diameter (d) to the horizontal plane passing through the center of the ball socket can also be implemented without limitation.

## Claims

1. A self-centering double cardan joint of the type generally used in the cardan shafts transmitting the rotational motion and torque in the motor vehicles and enabling the axis of rotation to be changed, in which input and output pieces (10, 12) are connected to a body (11) by means of cross joints (13), in which the input piece (10) comprises a ball socket (21), the output piece (12) comprises a centering pin (23) operating inside the cylindrical recess form provided inside ball (22) that will be placed inside the ball socket (21) **characterized in that** said ball (22) is provided with a complete spherical geometry such that it does not comprise any lathing form (31) and two mounting recesses (24) are opposedly formed on the upper portion of the ball socket (21).

2. The self-centering double cardan joint according to Claim 1, **characterized in that** the input piece (10) is a flange yoke.

3. The self-centering double cardan joint according to Claim 1, **characterized in that** the input piece (10) is a tube yoke.

4. The self-centering double cardan joint according to Claim 1, **characterized in that** the input piece (10) is a sliding shaft yoke.

5. The self-centering double cardan joint according to Claim 1, **characterized in that** the output piece (12) is a flange yoke.

6. The self-centering double cardan joint according to Claim 1, **characterized in that** the output piece (12) is a tube yoke.

7. The self-centering double cardan joint according to Claim 1, **characterized in that** the output piece (12) is a sliding shaft yoke.

## Patentansprüche

1. Selbstzentrierende Kardandoppelgelenk das, im Allgemeinen bei Kardanwellen verwendet wird, die die Drehbewegung und das Drehmoment in den Kraftfahrzeugen übertragen und die Änderung der Drehachse ermöglichen, in der Eingangs- und Ausgangsteile (10, 12) mit dem Körper (11) mittels der Kreuzgelenke (13) verbunden ist, in der der Eingangsteil (10) eine Kugelschale (21) umfasst, wobei der Ausgansteil (12) einen Zentrierstift (23) aufweist, der innerhalb der zylindrischen Ausnehmungsform arbeitet, die innerhalb der Kugel (22) vorgesehen ist, die innerhalb der Kugelschale (21) angeordnet sein wird **dadurch gekennzeichnet, dass** die Kugel (22) mit einer vollständigen sphärischen Geometrie versehen ist, sodass sie keine Drehform (31) umfasst und zwei Befestigungsausnehmungen (24) gegenüberliegend auf dem oberen Abschnitt der Kugelschale (21) ausgebildet sind.

2. Selbstzentrierende Kardandoppelgelenk nach Anspruch 1, **dadurch gekennzeichnet, dass** das Eingangsteil (10) ein flanschartiges Joch ist.

3. Selbstzentrierende Kardandoppelgelenk nach Anspruch 1, **dadurch gekennzeichnet, dass** das Eingangsteil (10) ein rohrförmiges Joch ist.

4. Selbstzentrierende Kardandoppelgelenk nach Anspruch 1, **dadurch gekennzeichnet, dass** das Eingangsteil (10) ein gleitwellen-artiges Joch ist.

5. Selbstzentrierende Kardandoppelgelenk nach Anspruch 1, **dadurch gekennzeichnet, dass** das Ausgangsteil (12) ein flanschartiges Joch ist.

6. Selbstzentrierende Kardandoppelgelenk nach Anspruch 1, **dadurch gekennzeichnet, dass** das Ausgangsteil (12) ein rohrförmiges Joch ist.

7. Selbstzentrierende Kardandoppelgelenk nach Anspruch 1, **dadurch gekennzeichnet, dass** das Ausgangsteil (12) ein gleitwellen-artiges Joch ist.

## Revendications

1. Joint à double cardan à centrage automatique du type généralement utilisé dans les arbres à cardan transmettant le mouvement de rotation et le couple dans les véhicules automobiles et permettant de changer l'axe de rotation, dans lequel des pièces d'entrée et de sortie (10, 12) sont reliées à un corps (11) au moyen de joints transversaux (13), dans lesquels la pièce d'entrée (10) comprend une rotule sphérique (21), la pièce de sortie (12) comporte une broche de centrage (23) agissant à l'intérieur de la forme d'évidement cylindrique prévue à l'intérieur de la rotule (22) qui sera placée à l'intérieur de le rotule sphérique (21) **caractérisé en ce que** ladite rotule (22) est pourvue d'une géométrie sphérique complète telle qu'elle ne comporte pas de forme de lattage (31) et deux évidements de montage (24) sont formés de manière opposée sur la partie supérieure de la rotule sphérique (21).

2. Joint à double cardan à centrage automatique selon la revendication 1, **caractérisé en ce que** la pièce d'entrée (10) est une fourche de bride.

3. Joint à double cardan à centrage automatique selon la revendication 1, **caractérisé en ce que** la pièce d'entrée (10) est une fourche de tuyau.

4. Joint à double cardan à centrage automatique selon la revendication 1, **caractérisé en ce que** la pièce d'entrée (10) est une fourche d'arbre coulissant.

5. Joint à double cardan à centrage automatique selon la revendication 1, **caractérisé en ce que** la pièce de sortie (12) est une fourche de bride.

6. Joint à double cardan à centrage automatique selon la revendication 1, **caractérisé en ce que** la pièce de sortie (12) est une fourche de tuyau.

7. Joint à double cardan à centrage automatique selon la revendication 1, **caractérisé en ce que** la pièce de sortie (12) est une fourche d'arbre coulissant.
